# EUROPÄISCHE PATENTANMELDUNG

(11) **EP 1 382 650 A1**
(43) Veröffentlichungstag der Anmeldung: **21.01.2004**
(21) Anmeldenummer: 03012965.4
(22) Anmeldetag: 07.06.2003
(51) Int. Cl.: C09D 175/06, C08G 18/42, C08G 18/80, C09D 5/03

(54) **PUR-Pulverlacke für Beschichtungen mit mattem Erscheinungsbild**

(30) Priorität: 20.07.2002 DE 10233103
(71) Anmelder: Degussa AG, 40474 Düsseldorf (DE)
(72) Erfinder: Wenning, Andreas, Dr., 48301 Nottuln (DE); Weiss, Jörn Volker, Dr., 45721 Haltern am See (DE)

(57) **Zusammenfassung**

Die Erfindung beschreibt neue Polyurethan-Pulverlacke aus Polyharnstoffen, Polyestern und Vernetzern, insbesondere für matte Beschichtungen.

## Beschreibung

Die Erfindung beschreibt neue Polyurethan-Pulverlacke, insbesondere für matte Beschichtungen, aus Polyharnstoffen, Polyestern und Vernetzern.

Seit geraumer Zeit gibt es ein zunehmendes Interesse an Pulverlacken, die eine matte Oberfläche ergeben. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Harnstoff- und uretdiongruppenhaltige Polyisocyanate sind erst seit kurzer Zeit bekannt. Die DE-OS 195 46 750 beansprucht Reaktionsprodukte aus Isophorondiisocyanat-Uretdion und disekundären Diaminen als Härter zur Herstellung von Polyurethan (PUR)-Beschichtungen mit glänzenden Oberflächen.

In der DE-OS 196 30 844 werden erstmals matte PUR-Pulverlacke beschrieben, die harnstoffgruppenhaltige Isophorondiisocyanat-Uretdione als Härterkomponente enthalten. Sie werden durch die Umsetzung von Uretdionen mit Wasser hergestellt. Dabei bilden sich intermediär unter Abspaltung von Kohlendioxid primäre Amine, die sich mit noch vorhandenen Isocyanatgruppen zu Harnstoffen umsetzen. Die Stickstoffatome der Harnstoffgruppen sind jeweils monosubstituiert. Reaktionen von Polyisocyanaten mit Wasser sind aufgrund der Bildung von Nebenprodukten schwierig zu reproduzieren.

Die DE-OS 196 37 375 beschreibt PUR-Pulverlacke, die durch harnstoffgruppenhaltige Isophorondiisocyanat-Uretdione als Härter mattierend eingestellt werden. Diese Härter entstehen durch die Umsetzung von Isophorondiisocyanat-Uretdion mit disekundären Diaminen. Die disekundären Diamine sind Umsetzungsprodukte aus diprimären Diaminen und Malein- oder Fumarsäureestern.

In der DE-OS 196 37 377 und in der DE-OS 198 16 547 werden uretdiongruppen- und harnstoffgruppenhaltige Polyadditionsprodukte als Härterkomponente zur Mattierung von PUR-Pulverlacken beansprucht. Die Herstellung dieser Härter erfolgt durch die Umsetzung von Isophorondiisocyanat-Uretdion mit Diaminen, die eine primäre und sekundäre Aminogruppen enthalten. Die Herstellung der reinen Diamine ist z. T. komplex und recht kostenintensiv.

Die DE 10042318 beschreibt neue matte PUR-Pulverlacke, die einfach herstellbar sind und die daraus hergestellten Pulverlackbeschichtungen gute mechanische Eigenschaften aufweisen. Die Mattierung wird durch eine Kombination eines Polyharnstoffs mit einem bernsteinsäurehaltigem Polyester hervorgerufen. Dadurch ist die Palette an einsetzbaren Polyestern beschränkt.

Es bestand die Aufgabe, neue PUR-Pulverlacke zu finden, die zu matten Beschichtungen führen. Die daraus hergestellten Pulverlackbeschichtungen sollten in ihren mechanischen Eigenschaften auf unverändert hohem Niveau bleiben.

Die Aufgabe wurde durch die erfindungsgemäßen PUR-Pulverlacke gelöst. Es war überraschend, dass durch die Kombination von Polyharnstoff und Polyestern, die entweder keine oder weniger als 15 mol-% Bernsteinsäure als Polycarbonsäurekomponente enthielten, PUR-Pulverlacke mit hervorragenden Eigenschaften, insbesondere bei matten Beschichtungen, erhalten werden konnten.

Gegenstand der Erfindung sind Polyurethan-Pulverlacke enthaltend
A) 3 - 25 Gew.-% Polyharnstoff;
B) 35 - 75 Gew.-% mindestens eines amorphen und/oder (semi)kristallinen Polyesters, aufgebaut aus Polyolen und Polycarbonsäuren und/oder deren Ester und/oder Anhydride mit einer OH-Zahl von *5-250* mg KOH/g und einem Schmelzpunkt von 50 bis 130 °C,;
C) 5 - 30 Gew.-% mindestens eines Härters auf der Basis von blockierten Polyisocyanaten, Isocyanuraten und/oder Uretdionen mit einer Funktionalität von mindestens 2;
D) 0,5 - 50 Gew.-% Hilfs- und Zusatzstoffe;
wobei der Anteil an Bernsteinsäure oder deren Anhydrid in der Komponente B) kleiner als 15 Mol-% beträgt und pro OH-Gruppe der Komponente B) 0,5 bis 1,2 NCO-Gruppen der Komponente C) zur Verfügung stehen.

Die erfindungsgemäßen PUR-Pulverlacke enthalten 3 - 25 Gew.-% Polyharnstoff. Üblicherweise sind die Polyharnstoffe aus mindestens einem mindestens difünktionellen Amin und Isocyanat in einem NCO/NH₂-Verhältnis von 0,9 bis 1,1 zu 1 aufgebaut.

Polyharnstoffe sind bekannt und werden beispielsweise beschrieben in:
Houben-Weyl E 20/2 (1987) Seiten 1721 - 1751;
Houben-Weyl XIV/2 (1963) Seiten 165 - 171.

Im Rahmen der Erfindung können alle spröden, hochschmelzenden Polyharnstoffe, z. B. solche aus aliphatischen, (cyclo)aliphatischen, cycloaliphatischen und aromatischen Diaminen und/oder Polyaminen (C₅ - C₁₈) und den entsprechenden oder auch anderen Isocyanaten (als Diisocyanate wie auch deren Oligomere, z. B. Isocyanurate) eingesetzt werden.

Besonders geeignet sind die Diisocyanate und/oder Isocyanurate von Isophorondiisocyanat (IPDI), Hexamethylendiisocyanat (HDI) und 4.4'-Dicyclohexylmethandiisocyanat (HMDI).

Eine bevorzugte Ausführungsform der Erfindung ist die Verwendung von Polyharnstoffen auf der Basis von nicht aromatischen Aminen und Isocyanaten, wie z. B. Isophorondiamin (IPD) und Isophorondiisocyanat (IPDI) und/oder HDI, wobei das Diisocyanat allein, als Isocyanurat und in solchen Mischungen einsetzbar ist. Die im Rahmen dieser Anmeldung bevorzugt eingesetzten Polyharnstoffe sind in der DE 10042322 beschrieben und Teil der Offenbarung dieser Anmeldung.

Bei der Komponente B) handelt es sich um amorphe und/oder (semi)kristalline Polyester.

Bei dem Polyester B) ist es erfindungswesentlich, dass dieser aus weniger als 15 Mol-% Bemsteinsäure aufgebaut ist.

Die amorphen Polyester B) haben eine Funktionalität von 2,0 bis 5,0, bevorzugt 2,0 bis 4,2, eine OH-Zahl von 5 bis 250 mg KOH/g, insbesondere 20 bis 250 mg KOH/g, eine Viskosität bei 160 °C von < 60 000 mPa·s, einen Schmelzpunkt von 50 °C bis 130 °C, bevorzugt von 70 bis 120 °C und eine Glasübergangstemperatur von > 40 °C.

Die (semi)kristallinen Polyester B) haben eine Funktionalität von 2,0 bis 4,0, eine OH-Zahl von 5 bis 250 mg KOH/g, insbesondere von 5 bis 150 mg KOH/g, einen Schmelzpunkt von 50 °C bis 130 °C und eine Glasübergangstemperatur von < -10 °C.

Prinzipiell sind alle bekannten linearen und/oder verzweigten Polyole und Polycarbonsäuren und/oder deren Ester und/oder deren Anhydride im Rahmen der Erfindung zur Herstellung des Polyesters B) geeignet. Geeignete Polyole werden z. B. in DE 27 35 497 und DE 30 04 903 beschrieben. Geeignete Polycarbonsäuren werden z.B. in der DE 101 59 488 beschrieben.

Bevorzugt eingesetzte Polyole sind Monoethylenglykol, Diethylenglycol, Hydroxypivalinsäureneopentylglykolester, Butandiol-1,4, Pentandiol-1,2, Pentandiol-1,5, Hexandiol-1,6, Dodecandiol-1,12, Cyclohexandiol, Neopentylglykol, Bis-(1,4-hydroxymethyl)-cyclohexan, Trimethylolpropan, Glyzerin oder Pentaerythrit.

Bevorzugt eingesetzte Carbonsäuren und/oder deren Ester und/oder deren Anhydride sind Terephthalsäure, Isophthalsäure, Phthalsäure, Adipinsäure, Azelainsäure, Bernsteinsäure, Sebacinsäure, Dodecandisäure, Hexahydroterephthalsäure, Hexahydrophthalsäure, 1,4-Cyclohexandicarbonsäure, Trimellitsäure oder Pyromellitsäure.

Die Polyester können aus an sich bekannte Weise durch Kondensation von Polyolen und Polycarbonsäuren in einer Inertgasatmosphäre bei Temperaturen von 100 bis 260 °C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyd Resins, 51 - 59, Reinhold Plastics Appl. Series, Reinhold Publishing Comp., New York, 1961 oder in DE 27 35 497 und DE 30 04 903, beschrieben ist.

Als Härter C) auf der Basis von Polyisocyanaten sind prinzipiell die bekannten Härter auf dem Gebiet der Pulverlacke einsetzbar. Bevorzugt werden blockierungsmittelhaltige wie auch intern blockierte Polyisocyanate eingesetzt. Sie werden z. B. in der DE 21 05 777, 25 42 191, 27 35 497, 30 39 824, 30 30 572, 30 30 513, 37 39 549, 101 59 768 und 101 59 488 beschrieben.

So können die erfindungsgemäßen Pulverlacke Härter C), basierend auf blockierten Polyisocyanaten, blockierten Isocyanuraten und Uretdionen allein oder in Mischungen, enthalten. Bevorzugt werden die Ausgangskomponenten ausgewählt aus IPDI, HDI und HMDI.

Als Blockierungsmittel können die bekannten eingesetzt werden. Bevorzugt werden Caprolactam, Triazole, Oxime, Pyrazole eingesetzt.

Das Verhältnis von Harz (Komponente B) zu Vernetzer (Komponente C) wird so gewählt, dass pro OH-Gruppe des Harzes 0,5 bis 1,2, vorzugsweise 0,8-1,0, NCO-Gruppen zur Verfügung stehen.

Die in den erfindungsgemäßen PUR-Pulverlacken enthaltenen Hilfs- und Zusatzstoffe D) sind z. B. Verlaufinittel, Pigmente, Füllstoffe, Farbstoffe, Katalysatoren, Licht- und Hitzestabilisatoren, Antioxidantien und/oder Effektadditive. Diese sind üblicherweise in Mengen von 0,5 - 50 Gew.-% enthalten.

Zur Herstellung der gebrauchsfertigen Pulverlacke werden die Komponenten A), B), C) und D) in der Schmelze homogenisiert. Dies kann in geeigneten Apparaten, z. B. in beheizbaren Knetern, vorzugsweise aber durch Extrudieren erfolgen, wobei Temperaturgrenzen von 130 bis 140 °C nicht überschritten werden sollten. Die extrudierte homogenisierte Masse wird nach Abkühlen auf Raumtemperatur, nach geeigneter Zerkleinerung zum sprühfertigen Pulver vermahlen und auf eine Korngröße < 100 µm abgesiebt.

Die erfindungsgemäßen PUR-Pulverlacke eignen sich hervorragend zur Herstellung von Beschichtungen mit mattem Erscheinungsbild.

Gegenstand der Erfindung ist die Verwendung der Polyurethan-Pulverlacke enthaltend
A) 3 - 25 Gew.-% Polyharnstoff;
B) 35 - 75 Gew.-% mindestens eines amorphen und/oder (semi)kristallinen Polyesters, aufgebaut aus Polyolen und Polycarbonsäuren und/oder deren Ester und/oder deren Anhydride, mit einer OH-Zahl von 5 - 250 mg KOH/g und einem Schmelzpunkt von 50 bis 130 °C;
C) 5 - 30 Gew.-% mindestens eines Härters auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe;
wobei der Anteil an Bemsteinsäure oder deren Anhydrid in der Komponente B) kleiner als 15 Mol-% beträgt und pro OH-Gruppe der Komponente B) 0,5 bis 1,2 NCO-Gruppen der Komponente C) zur Verfügung stehen, zur Herstellung von Beschichtungen mit mattem Erscheinungsbild.

Diese erfindungsgemäßen matten Beschichtungen weisen je nach Anwendungszweck Glanzgrade von weniger als 70 im 60 °-Winkel auf.

Das Auftragen des sprühfertigen Pulvers auf geeignete Substrate zur Herstellung von matten Beschichtungen kann nach den bekannten Verfahren, z. B. elektrostatisches Pulversprühen, Wirbelsintern oder elektrostatisches Wirbelsintern erfolgen. Nach dem Pulverauftrag werden die beschichteten Werkstücke zur konventionellen Aushärtung in einem Ofen 60 Minuten bis 30 Sekunden auf eine Temperatur von 160 bis 250 °C, vorzugsweise 30 bis 1 Minuten bei 170 bis 240 °C erhitzt.

Nachfolgend wird der Gegenstand der Erfindung anhand von Beispielen erläutert.

### A) Polyharnstoff

### Beispiel 1

Der Polyharnstoff (PH) bestand aus 36 Gew.-% Isophorondiamin (IPD), 31 Gew.-% Isophorondiisocyanat (IPDI) und 32 Gew.-% IPDI-Isocyanurat. Das Produkt war weiß, spröde und in üblichen Lösemitteln unlöslich. Oberhalb von 250 °C trat Zersetzung ein.

### B) Polyester

### Beispiel 1

Der Polyester hatte folgende Zusammensetzung: als Säurekomponente: 100 mol-% Dodecandisäure; als Alkoholkomponente: 100 mol-% Hexandiol-1,6. Der Polyester hatte eine OH-Zahl von 29 mg KOH/g, eine Säurezahl von 1 mg KOH/g und einen Schmelzpunkt von 55 °C.

### Beispiel 2

Der Polyester hatte folgende Zusammensetzung: als Säurekomponente: 93 mol-% Terephthalsäure, 2,5 mol-% Isophthalsäure, 4,5 mol-% Adipinsäure; als Alkoholkomponenten: 88 mol-% Neopentylglykol, 4 mol-% Pentandiol-1,2, 8 mol-% Trimethylolpropan. Der Polyester hatte eine OH-Zahl von 47 mg KOH/g, eine Säurezahl von 7,0 mg KOH/g und eine Glasübergangstemperatur von 56 °C.

### C) Herstellung der blockierten Isocyanatkomponente

### Beispiel 1

699,8 g Desmodur N 3300 (Polyisocyanato-Isocyanurat auf Basis Hexamethylendiisocyanat der Fa. Bayer) und 1632,8 g VESTANAT T 1890 (Polyisocyanato-Isocyanurat auf Basis Isophorondiisocyanat der Fa. Degussa) wurden auf 100 °C aufgeheizt. Es wurden 3,5 g Dibutylzinndilaurat zugegeben. Danach wurden portionsweise 1163,9 g ε-Caprolactam zugegeben. Eine Stunde nach der letzten Portion an ε-Caprolactam war die Reaktion beendet. Danach wurde das Reaktionsgemisch auf Raumtemperatur abgekühlt. Das Reaktionsprodukt hatte einen Gehalt an freien NCO-Gruppen von 0,4 %, einen NCO-Gesamt-Gehalt von 12,0 % und einen Schmelzbereich von 88 - 91 °C.

### D) Polyurethan-Pulverlacke

### Allgemeine Herstellungsvorschrift

Die zerkleinerten Produkte - blockiertes Polyisocyanat (Vernetzer), Polyester, Verlaufinittel, Entgasungsmittel und Katalysator-Masterbatch - werden mit dem Weißpigment in einem Kollergang innig vermischt und anschließend im Extruder bis maximal 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 kV auf entfettete, Eisen phosphatierte Stahlbleche appliziert und in einem Umluftofen eingebrannt.

Die Formulierungen enthielten 25 Gew.-% Kronos 2160 (Titandioxid der Fa. Kronos), 1 Gew.-% Resiflow PV 88 (Verlaufmittel der Worlee-Chemie), 0,5 Gew.-% Benzoin (Entgasungsmittel der Fa. Merck-Schuchard) und 0,1 Gew.-% Dibutylzinndilaurat (Katalysator der Fa. Crompton Vinyl Additives GmbH). Das OH/NCO-Verhältnis betrug 1:1.

**Tabelle 1:**

| Lackdaten weißpigmentierter, matter PUR-Pulverlacke | | | |
|---|---|---|---|
| Polyharnstoff A) | 10,0 g A) 1 | 20,0 g A) 1 | - |
| Polyester B) | 10,0 g B) 1 | 12,7 g B) 1 | 11,6 g B) 1 |
| | 39,9 g B) 2 | 29,7 g B) 2 | 46,2 g B) 2 |
| Isocyanat C) | 13,5 g C) 1 | 11,0 g C) 1 | 15,6 g C) 1 |
| Einbrennbedingung | 200°C/12 min | 200 °C/12 min | 200 °C/12 min |
| Schichtdicke (um) | 60 - 70 | 65 - 72 | 71 - 78 |
| Glanz 60°-W. | 65 | 45 | 90 |
| Tiefung (mm) | > 10 | > 10 | > 10 |
| KS dir./indir. (inch lb) | > 80 / 80 | > 80 / > 80 | > 80 / > 80 |
| Bemerkung | | | Vergleich |

Die Abkürzungen in der Tabelle bedeuten:
Glanz 60°-W. = Messung des Glanzes nach Gardner (ASTM-D 5233)
Tiefüng = Tiefung nach Erichsen (DIN 53 156)
KS dir./indir. = direkter und indirekter Kugelschlag (ASTM D 2794 - 93)
T-Bend = Verformungstest (ECCA T 7)

## Patentansprüche

1. Polyurethan-Pulverlacke enthaltend
A) 3 - 25 Gew.-% Polyharnstoff;
B) 35 - 75 Gew.-% mindestens eines amorphen und/oder (semi)kristallinen Polyesters, aufgebaut aus Polyolen und Polycarbonsäuren und/oder deren Ester und/oder deren Anhydride, mit einer OH-Zahl von 5 - 250 mg KOH/g und einem Schmelzpunkt von 50 bis 130 °C;
C) 5 - 30 Gew.-% mindestens eines Härters auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe;
wobei der Anteil an Bernsteinsäure oder deren Anhydrid in der Komponente B) kleiner als 15 Mol-% beträgt und pro OH-Gruppe der Komponente B) 0,5 bis 1,2 NCO-Gruppen der Komponente C) zur Verfügung stehen.

2. Polyurethan-Pulverlacke nach Anspruch 1,
**dadurch gekennzeichnet,**
**dass** der Polyharnstoff A) aus
mindestens einem mindestens difünktionellem Isocyanat
und
mindestens einem mindestens difünktionellen Amin besteht, und ein NCO/NH₂-Verhältnis von 0,9 - 1,1 zu 1 aufweist.

3. Polyurethan-Pulverlacke nach Anspruch 2,
**dadurch gekennzeichnet,**
**dass** der Polyharnstoff aus einem Isocyanat und/oder Isocyanurat besteht.

4. Polyurethan-Pulverlacke nach Anspruch 3,
**dadurch gekennzeichnet,**
**dass** das Isocyanat oder Isocyanurat aus IPDI, HDI und/oder HMDI ausgewählt wird.

5. Polyurethan-Pulverlacke nach mindestens einem der vorherigen Ansprüche,
**dadurch gekennzeichnet,**
**dass** der Polyharnstoff aliphatische, (cyclo)aliphatische, cycloaliphatische, aromatische Diamine und/oder Polyamine mit 5 - 18 Kohlenstoffatomen enthält.

6. Polyurethan-Pulverlacke nach Anspruch 5,
**dadurch gekennzeichnet,**
**dass** als Amin IPD eingesetzt wird.

7. Polyurethan-Pulverlacke nach mindestens einem der vorherigen Ansprüche,
**dadurch gekennzeichnet,**
**dass** die Komponente B) ein amorpher Polyester ist.

8. Polyurethan-Pulverlacke nach Anspruch 7,
**dadurch gekennzeichnet,**
**dass** der Polyester eine Funktionalität von 2,0 bis 5,0, eine OH-Zahl von 5 bis 250 mg KOH/g, eine Viskosität bei 160 °C von < 60 000 mPa·s und einen Schmelzpunkt von 50 °C bis 130 °C aufweist.

9. Polyurethan-Pulverlacke nach mindestens einem der Ansprüche 1 bis 6,
**dadurch gekennzeichnet,**
**dass** die Komponente B) ein (semi)kristalliner Polyester ist.

10. Polyurethan-Pulverlacke nach Anspruch 9,
**dadurch gekennzeichnet,**
**dass** der Polyester eine Funktionalität von 2,0 bis 4,0, eine OH-Zahl von 5 bis 250 mg KOH/g, einen Schmelzpunkt von 50 °C bis 130 °C und eine Glasübergangstemperatur von <-10 °C aufweist.

11. Polyurethan-Pulverlacke nach mindestens einem der vorherigen Ansprüche,
**dadurch gekennzeichnet,**
**dass** der Polyester B) aus mindestens einem der folgenden Polyole aufgebaut ist: Monoethylenglykol, Diethylenglycol, Hydroxypivalinsäureneopentylglykolester, Butandiol-1,4, Pentandiol-1,2, Pentandiol-1,5, Hexandiol-1,6, Dodecandiol-1,12, Cyclohexandiol, Neopentylglykol, Bis-(1,4-hydroxymethyl)-cyclohexan, Trimethylolpropan, Glyzerin oder Pentaerythrit.

12. Polyurethan-Pulverlacke nach mindestens einem der vorherigen Ansprüche,
**dadurch gekennzeichnet,**
**dass** der Polyester B) aus mindestens einem der folgenden Säuren und/oder Ester und/oder Anhydride aufgebaut ist:
Terephthalsäure, Isophthalsäure, Phthalsäure, Adipinsäure, Azelainsäure, Bemsteinsäure, Sebacinsäure, Dodecandisäure, Hexahydroterephthalsäure, Hexahydrophthalsäure, 1,4-Cyclohexandicarbonsäure, Trimellitsäure oder Pyromellitsäure.

13. Polyurethan-Pulverlacke nach mindestens einem der Ansprüche 1 bis 12,
**dadurch gekennzeichnet,**
**dass** Härter C) auf der Basis von blockierten Polyisocyanaten, blockierten Isocyanuraten und/oder Uretdionen der Diisocyanate IPDI, HDI und/oder HMDI enthalten sind.

14. Polyurethan-Pulverlacke nach mindestens einem der Ansprüche 1 bis 13,
**dadurch gekennzeichnet,**
**dass** der Härter C) mit Blockierungsmittel ausgewählt aus Caprolactam, Triazolen, Oximen, Pyrazolen blockiert ist.

15. Polyurethan-Pulverlacke nach mindestens einem der Ansprüche 1 bis 14,
**dadurch gekennzeichnet,**
**dass** als Hilfs- und Zusatzstoffe D) Verlaufmittel, Pigmente, Füllstoffe, Farbstoffe, Katalysatoren, Licht- und Hitzestabilisatoren, Antioxidantien und/oder Effektadditive eingesetzt werden.

16. Verwendung von Polyurethan-Pulverlacken enthaltend
A) 3-25 Gew.-% Polyharnstoff;
B) 35 - 75 Gew.-% mindestens eines amorphen und/oder (semi)kristallinen Polyesters, aufgebaut aus Polyolen und Polycarbonsäuren und/oder deren Ester und/oder deren Anhydride, mit einer OH-Zahl von 5 - 250 mg KOH/g und einem Schmelzpunkt von 50 bis 130°C;
C) 5 - 30 Gew.-% mindestens eines Härters auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe;
wobei der Anteil an Bernsteinsäure oder deren Anhydrid in der Komponente B) kleiner als 15 Mol-% beträgt und pro OH-Gruppe der Komponente B) 0,5 bis 1,2 NCO-Gruppen der Komponente C) zur Verfügung stehen, zur Herstellung von Beschichtungen mit mattem Erscheinungsbild.

17. Verwendung nach Anspruch 16,
**dadurch gekennzeichnet,**
**dass** die Einsatzstoffe der Ansprüche 1 bis 15 enthalten sind.

18. Beschichtungen mit mattem Erscheinungsbild,
**dadurch gekennzeichnet,**
**dass** diese aus Polyurethan-Pulverlacken enthaltend
A) 3-25 Gew.-% Polyharnstoff;
B) 35 - 75 Gew.-% mindestens eines amorphen und/oder (semi)kristallinen Polyesters, aufgebaut aus Polyolen und Polycarbonsäuren und/oder deren Ester und/oder deren Anhydride, mit einer OH-Zahl von 5 - 250 mg KOH/g und einem Schmelzpunkt von 50 bis 130 °C;
C) 5 - 30 Gew.-% mindestens eines Härters auf der Basis von blockierten Polyisocyanaten und/oder Isocyanuraten und/oder Uretdionen mit einer Funktionalität von mindestens 2;
D) 0,5 - 50 Gew.-% Hilfs- und Zusatzstoffe;
wobei der Anteil an Bemsteinsäure oder deren Anhydrid in der Komponente B) kleiner als 15 Mol-% beträgt und pro OH-Gruppe der Komponente B) 0,5 bis 1,2 NCO-Gruppen der Komponente C) zur Verfügung stehen, bestehen.
